# EUROPÄISCHE PATENTSCHRIFT

(11) **EP 1 864 530 B1**
(45) Veröffentlichungstag und Bekanntmachung des Hinweises auf die Patenterteilung: **03.03.2010**
(21) Anmeldenummer: 06705422.1
(22) Anmeldetag: 29.03.2006
(51) Int. Cl.: H04W 4/02

(54) **VERFAHREN ZUM AUSFÜHREN VON ORTSPEZIFISCHEN DIENSTEN, RUNDFUNKEINHEIT UND MOBILES EMPFANGSGERÄT**
METHOD FOR PERFORMING LOCATION-SPECIFIC SERVICES, BROADCASTING UNIT AND MOBILE RECEIVING DEVICE
PROCEDE POUR EXECUTER DES SERVICES BASES SUR LA LOCALISATION, UNITES DE RADIODIFFUSION ET RECEPTEUR MOBILE

(30) Priorität: 29.03.2005 CH 531052005
(43) Veröffentlichungstag der Anmeldung: 12.12.2007
(73) Patentinhaber: Swisscom AG, 3050 Bern (CH)
(72) Erfinder: RITTER, Rudolf, CH-3052 Zollikofen (CH)
(74) Vertreter: Rentsch & Partner
(86) Internationale Anmeldenummer: PCT/CH2006/000182
(87) Internationale Veröffentlichungsnummer: WO 2006/102784

(56) Entgegenhaltungen:
- EP-A- 1 420 599
- US-A- 6 088 598
- US-A1- 2004 203 863
- US-B1- 6 424 840

## Beschreibung

### Technisches Gebiet

Die vorliegende Erfindung betrifft ein Verfahren zum Ausführen von ortspezifischen Diensten, eine dafür geeignete Rundfunkeinheit und ein dafür geeignetes mobiles Empfangsgerät. Die vorliegende Erfindung betrifft insbesondere ein Verfahren zum Ausführen von ortspezifischen Diensten einer Rundfunkeinheit, eine Rundfunkeinheit, ein mobiles Empfangsgerät, das eingerichtet ist, seine aktuelle Position zu bestimmen, sowie ein Computerprogrammprodukt zur Steuerung des mobilen Empfangsgeräts. Insbesondere betrifft die vorliegende Erfindung ein Verfahren und dafür geeignete Vorrichtungen zum Einrichten von Zellen für ortsspezifische Dienste einer Rundfunkeinheit.

### Stand der Technik

Ortsspezifische Dienste (so genannte Location Based Services) sind insbesondere in der Mobilkommunikation bekannt, wo mobile Empfangsgeräte abhängig von ihrer aktuellen geografischen Position mit unterschiedlichen Diensten und/oder Informationen versorgt werden. Die bekannten ortsspezifischen Dienste werden unter Zuhilfenahme verschiedenster Dienste und Mechanismen implementiert, beispielsweise E-OTD (Enhanced Observed Time Difference), FOTA (Forced Timing Advance), TA (Timing Advance), TDMA (Timing Division Multiple Access), TDOA (Time Difference On Arrival), TOA (Time On Arrival). Immer häufiger werden für die Ausführung ortsspezifischer Dienste auch Kombinationssysteme eingesetzt, in welchen satellitenbasierte Ortungssysteme, wie GPS (Global Positioning System) oder Galileo, mit Kommunikations-Systemen, wie Kommunikationsendgeräte für GSM (Global System for Mobile Communication) oder UMTS (Universal Mobile Telecommunication System), kombiniert werden.

In der Patentanmeldung WO014336 wird ein System für ortsspezifische Dienste ab einem Rundfunksystem (Broadcast) beschrieben. Gemäss WO0143364 ist ein mobiles Empfangsgerät mit einem Positionierungssystem (GPS), einem Rundfunkempfänger sowie einem Funktransmitter versehen und übermittelt auf Benutzerinstruktion die aktuelle Position, die aktuelle eingestellte Empfangsfrequenz sowie Zeit und Benutzerangaben drahtlos an eine Zentrale. Die Zentrale bestimmt entsprechend den empfangenen Daten einen Informationsinhalt und stellt diesen für den Benutzer in einer Ober das Internet zugänglichen Datenbank bereit. Dieses System weist allerdings den Nachteil auf, dass für die Bereitstellung des ortsspezifischen Informationsinhalts ein Rückkanal für die Kommunikation vom mobilen Empfangsgerät an die Zentrale bereitgestellt werden muss.

Rundfunksysteme (Broadcastsysteme) sind in der Regel sehr grossflächige Systeme mit Versorgungsbereichen von beispielsweise mehreren hundert bis zu mehreren tausend Quadratkilometern. Für Betreiber der Rundfunksysteme (Broadcaster) ist es ökonomisch wichtig, mit wenigen Sendern möglichst viele Zuhörer zu erreichen. Andererseits sind ortspezifische Dienste oft nur in einer kleinen bis sehr kleinen Fläche, von beispielsweise einem bis zehn Meter Durchmesser, innerhalb des genannten Versorgungsbereich sinnvoll oder notwendig. Im Allgemeinen weisen die bekannten Systeme und Verfahren zur Bereitstellung ortsspezifischer Dienste und zur Übermittlung ortsspezifischer Informationen durch ein Rundfunksystem jedoch den Nachteil auf, dass ihre oft sehr grossen Versorgungsbereiche nicht genügend flexibel an dienstspezifische und/oder geografische Erfordernisse und/oder Gegebenheiten angepasst werden können.

EP 1420599 beschreibt ein Verfahren zum Definieren von geografischen Gebieten und zugeordneten Diensten für mobile Kommunikationsendgeräte, insbesondere Mobilfunktelefone in einem zellulären Mobilfunknetz. Für ein definiertes geografisches Gebiet übermitteln sogenannte Cell Broadcasting Centres, welche zur Abdeckung der Zellen des geografischen Gebiets zuständig sind, Gebietsinformationen und Dienstadressen an die Kommunikationsendgeräte, die sich in den betreffenden Zellen befinden. Die Übermittlung erfolgt durch die Basisstationen der Zellen beispielsweise mittels SMS (Short Message Service) oder über einen Steuerkanal. Wenn das Kommunikationsendgerät sich im geografischen Gebiet befindet erfolgt eine entsprechende Benachrichtigung an die Dienstadresse, und das Kommunikationsendgerät wird basierend auf dieser Benachrichtigung freigeschaltet um den Dienst zu benützen.

US 2004/0203863 beschreibt Vorrichtungen und ein Verfahren zum ortsabhängigen Auslösen von Diensten in mobilen Kommunikationsendgeräten, insbesondere in Mobilfunktelefonen. In diesen drahtlosen Kommunikationsgeräten werden Identifizierungen von Dienstgebieten, insbesondere Identifizierungen von Basisstationen oder Zellen eines zellulären Mobilfunknetzes, empfangen und gespeichert, wenn sie als Interessenspunkte selektiert werden. Wenn das drahtlose Kommunikationsgerät in ein Dienstgebiet eintritt, das einem selektierten Interessenspunkt entspricht, wird ein Dienst ausgelöst, der dem betreffenden Interessenspunkt zugeordnet ist.

### Darstellung der Erfindung

Es ist eine Aufgabe der vorliegenden Erfindung ein Verfahren, eine Rundfunkeinheit und ein mobiles Empfangsgerät zum Ausführen von ortspezifischen Diensten der Rundfunkeinheit vorzuschlagen, welche nicht die Nachteile der bekannten Systeme aufweisen. Es ist insbesondere eine Aufgabe der vorliegenden Erfindung ein Verfahren und dafür geeignete Vorrichtungen zum Einrichten von Zellen für ortsspezifische Dienste einer Rundfunkeinheit vorzuschlagen, welche flexibel an dienstspezifische und/oder geografische Erfordernisse und/oder Gegebenheiten anpassbar sind.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zum Ausführen von ortspezifischen Diensten einer Rundfunkeinheit Zellen für die ortsspezifischen Dienste eingerichtet werden, indem Zelldaten, die einen örtlichen Zellbereich definieren, durch die Rundfunkeinheit an ein mobiles Empfangsgerät übermittelt werden, und die Zelldaten im mobilen Empfangsgerät gespeichert werden. Die Zellbereiche, die zu versorgenden Zielgebieten entsprechen, werden beispielsweise durch Zentrumsangaben und Radius bestimmt. In einer Ausführungsvariante definieren die Zelldaten einen Cluster von mehreren örtlichen Zellbereichen, wodurch insbesondere komplexere Formen von zusammenhängenden Gebieten definiert werden können. Im mobilen Empfangsgerät wird die aktuelle Position des mobilen Empfangsgeräts bestimmt und durch das mobile Empfangsgerät auf Grund der aktuellen Position die aktuelle Präsenz des mobilen Empfangsgeräts im Zellbereich bestimmt. Das heisst, es wird im mobilen Empfangsgerät auf Grund der aktuellen Position des mobilen Empfangsgeräts bestimmt, ob das mobile Empfangsgerät sich im Zellbereich befindet, der durch die Zelldaten definiert wird. Bei positiv bestimmter Präsenz des mobilen Empfangsgeräts im Zellbereich, wird im mobilen Empfangsgerät ein den Zelldaten zugeordneter Dienst ausgeführt. Das heisst auf Grund weiterer Datenelemente, die in den Zelldaten enthalten sind oder den Zelldaten zugeordnet sind, werden Dienste definiert, die durch das mobile Empfangsgerät ausgeführt werden, wenn sich das mobile Empfangsgerät im Zellbereich befindet, der durch die Zelldaten definiert wird. Das Einrichten von Zellen für die ortsspezifischen Dienste durch die Rundfunkeinheit in einer Vielzahl von mobilen Empfangsgeräten im Versorgungsbereich der Rundfunkeinheit, ermöglicht den Versorgungsbereich in kleinere, interaktive und virtuelle (Versorgungs-)Zellen und Zellencluster dynamisch und optimal nach Bedarf und geografischen und/oder dienstspezifischen Parametern aufzuteilen. Solche Zellen können als Rundfunkversorgungszellen für ortspezifische Dienste oder BLBS-Zellen (Broadcast Location Based Services) bezeichnet werden. Dabei ist es möglich mehrere teilweise oder vollständig überlappende Zellbereiche für verschiedene Anwendungen und Dienste zu spezifizieren, die beispielsweise nach definierten Zeitmustern dynamisch ändern. Die Zellbereiche können sehr klein definiert werden und beispielsweise einen Durchmesser von wenigen Metern aufweisen. Die Zellbereiche können selbst innerhalb von Gebäuden definiert werden. Zudem können sich die Zellbereiche ausserhalb von den Versorgungsbereichen der Rundfunkeinheiten (Sender) befinden, so dass mobile Empfangsgeräte im Empfangbereich der Sender Zelldaten empfangen und speichern und erst später, beim Eintreffen in die durch die Zelldaten definierten Zellbereiche entsprechend reagieren. Zum Beispiel kann so ein mobiler Empfänger an einem ersten Tag in einer ersten Stadt Zelldaten über Zellbereiche in einer zweiten Stadt empfangen und erst am darauf folgenden Tag in den entsprechenden Zellbereichen in der zweiten Stadt entsprechend reagieren.

Vorzugsweise umfassen die ortspezifischen Dienste eine Datenübermittlung von der Rundfunkeinheit an das mobile Empfangsgerät. Bei positiv bestimmter Präsenz des mobilen Empfangsgeräts im Zellbereich, werden empfangene Daten, die den Zelldaten zugeordnet sind, im mobilen Empfangsgerät entgegengenommen und verarbeitet. Abhängig von der Anwendung und/oder Ausführungsvariante werden die Zelldaten und Nutzdaten von der Rundfunkeinheit zusammen oder separat (d.h. getrennt) an das mobile Empfangsgerät übermittelt. Im bevorzugten letzteren Fall umfassen die Zelldaten eine Zellidentifizierung und die Rundfunkeinheit übermittelt die Nutzdaten zusammen mit der Zellidentifizierung separat von den Zelldaten an das mobile Empfangsgerät. Das mobile Empfangsgerät ordnet die empfangenen Nutzdaten auf Grund der Zellidentifizierung den gespeicherten Zelldaten zu. Wenn sich das mobile Empfangsgerät im Zellbereich befindet, der durch die Zelldaten definiert wird, nimmt das mobile Empfangsgerät die empfangenen Nutzdaten zur weiteren Verarbeitung entgegen. Ansonsten werden die empfangenen Daten gelöscht respektive fallen gelassen. Diese bevorzugte Ausführungsvariante ermöglicht ein Verfahren zur Übermittlung von Daten von der Rundfunkeinheit an das mobile Empfangsgerät, in welchem Verfahren die Zelldaten, die den örtlichen Zellbereich definieren, durch eine Rundfunkeinheit an ein mobiles Empfangsgerät übermittelt werden; die Zelldaten im mobilen Empfangsgerät gespeichert werden; die aktuelle Position des mobilen Empfangsgeräts bestimmt wird; die aktuelle Präsenz des mobilen Empfangsgeräts im Zellbereich auf Grund der aktuellen Position durch das mobile Empfangsgerät bestimmt wird; und empfangene Daten, die den Zelldaten zugeordnet sind, im mobilen Empfangsgerät, bei positiv bestimmter Präsenz des mobilen Empfangsgeräts im Zellbereich, entgegengenommen und verarbeitet werden. Zum Beispiel können Information über den Strassenzustand in einen Zellcluster entlang einer Autobahn übermittelt werden, oder ein Alarm in ein Gebiet in dem sich ein Chemieunfall ereignet hat.

In einer Ausführungsvariante umfassen die Zelldaten eine Instruktion (Ausführungsbefehl). Die Instruktion dient zur Einleitung und Ausführung weiterer instruktionsspezifischer Dienste, die den Zelldaten zugeordnet sind. Bei positiv bestimmter Präsenz des mobilen Empfangsgeräts im Zellbereich wird die Instruktion im mobilen Empfangsgerät ausgeführt. Die Empfangsgeräte sind zudem in der Lage, die Instruktionen auszuführen, auch wenn der betreffende Sender ausser Betrieb ist, da die Zelldaten vorgängig gespeichert werden.

In einer weiteren Ausführungsvariante umfassen die Zelldaten einen Zelltyp. Im mobilen Empfangsgerät werden den Zelldaten zugeordnete empfangene Daten abhängig vom Zelltyp weiter verarbeitet. Das heisst, wenn sich das mobile Empfangsgerät im Zellbereich befindet, der durch die Zelldaten definiert wird, denen die empfangenen Daten zugeordnet sind, werden die empfangenen Daten entsprechend dem Zelltyp dieser Zelldaten weiter verarbeitet. Der Zelltyp umfasst beispielsweise einen Alarmtyp für Alarme, einen Informationstyp für Informationsdaten verschiedener Kategorien, einen Applikationstyp für ausführbare Applikation und/oder einen Linktyp für Hyperlinks. Der Zelltyp definiert Einsatzzweck, d.h. Diensttyp und/oder Datentyp, und umfasst in einer Ausführungsvariante (auch) die oben erwähnte Instruktion. Das heisst eine Zelle hat jeweils einen Zelltyp, der dem Einsatzzweck entspricht und zusätzlich zu seiner Bezeichnung auch einen Ausführungsbefehl (Instruktion) umfasst respektive definiert. Zum Beispiel wird beim Parameter Alarmtyp (Notruf, Emergency 911) in einem Empfangsgerät, dessen Position sich im Zellbereich befindet, der entsprechende Ausführungsbefehl ("Alarm") in der Regel automatisch ausgeführt. Solche Alarmzellen sind beispielsweise nur für autorisierte Parteien, z.B. Behörden, vorgesehen und können normalerweise durch Benutzer nicht deaktiviert (deselektiert) werden (siehe dazu den nachfolgenden Abschnitt). Der Parameter Informationstyp ist vorzugsweise in mehrere Kategorien (SubTypen) aufgeteilt und dient zur gezielten Information von Benutzern, die die entsprechenden Kategorien von Information empfangen wollen und sich im betreffenden Zellbereich befinden. Der Parameter Applikationstyp wird für die Übermittlung von ausführbaren Programmsequenzen (-modulen) an mobile Empfangsgeräte verwendet, bei denen dieser Zelltyp selektiert ist und die sich im betreffenden Zellbereich befinden. Der Parameter Linktyp wird für die Übermittlung von ausführbaren respektive zugreifbaren Hyperlinks an mobile Empfangsgeräte verwendet. Der Hyperlink wird beispielsweise unmittelbar nach dem Empfang ausgeführt respektive aktiviert, wenn der betreffende Zelltyp aktiviert ist und sich das Empfangsgerät im betreffenden Zellbereich befinden.

In einer Ausführungsvariante nimmt das mobile Empfangsgerät vom Benutzer Auswahlbefehle zur Selektion von Zelltypen entgegen. Der den Zelldaten zugeordnete Dienst wird im mobilen Empfangsgerät bei positiv bestimmter Präsenz des mobilen Empfangsgeräts in einem Zellbereich mit selektiertem Zelltyp ausgeführt. Das heisst der den Zelldaten zugeordnete Dienst wird im mobilen Empfangsgerät ausgeführt, wenn sich das mobile Empfangsgerät im Zellbereich befindet, der durch die Zelldaten definiert wird, *und* wenn die Zelldaten einen Zelltyp aufweisen, der vom Benutzer selektiert wurde. Beispielsweise werden empfangene Daten, die Zelldaten mit einem selektierten Zelltyp zugeordnet sind, vom mobilen Empfangsgerät zur weiteren Verarbeitung entgegengenommen, wenn sich das mobile Empfangsgerät im Zellbereich befindet, der durch diese Zelldaten definiert wird.

In einer Ausführungsvariante definieren die Zelldaten einen dreidimensionalen örtlichen Zellbereich. In entsprechender Weise wird eine aktuelle dreidimensionale Position des mobilen Empfangsgeräts bestimmt und die aktuelle Präsenz des mobilen Empfangsgeräts wird im dreidimensionalen örtlichen Zellbereich auf Grund der aktuellen dreidimensionalen Position bestimmt. Damit lassen sich räumliche Zellbereiche definieren, in hohen (mehrstöckigen) Gebäuden können somit definierbare Ebenen räumlich als Zellbereiche definiert werden.

In einer weiteren Ausführungsvariante umfassen die Zelldaten Gültigkeitsdaten, welche eine zeitliche Gültigkeit des örtlichen Zellbereichs definieren. Die Gültigkeitsdaten umfassen beispielsweise eine Start-Instruktion zur sofortigen Aktivierung des Zellbereichs (Bereitstellung der Zelle), eine Stopp-Instruktion zur unmittelbaren Deaktivierung des Zellbereichs (Abschalten der Zelle), einen Startzeitwert mit einem Stoppzeitwert zur Definition eines Zeitfensters (Lebensdauer der Zelle), und/oder einen Startzeitwert mit einer Zeitdauer zur Definition des Zeitfensters.

Neben dem Verfahren zum Ausführen von ortspezifischen Diensten einer Rundfunkeinheit, einer dafür geeigneten Rundfunkeinheit und einem dafür geeigneten mobilen Empfangsgerät betrifft die vorliegende Erfindung zudem ein Computerprogrammprodukt mit Computerprogrammcodemittel zur Steuerung eines oder mehrerer Prozessoren des mobilen Empfangsgeräts, derart, dass das mobile Empfangsgerät Zelldaten empfängt und speichert, die einen örtlichen Zellbereich definieren und die durch die Rundfunkeinheit ausgesendet werden, eine aktuelle Präsenz des mobilen Empfangsgeräts im Zellbereich auf Grund der aktuellen Position bestimmt, und einen den Zelldaten zugeordneten Dienst ausführt, bei positiv bestimmter Präsenz des mobilen Empfangsgeräts im Zellbereich. Das Computerprogrammprodukt umfasst insbesondere ein computerlesbares Medium, auf welchem die Computerprogrammcodemittel gespeichert sind. Dieses Computerprogrammprodukt hat den Vorteil, dass es standardmässige mobile Empfangsgeräte, die über Positionsbestimmungsmittel verfügen, für die Ausführung von ortspezifischen Diensten in virtuellen Rundfunkversorgungszellen einsetzbar macht.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein System zum Ausführen von ortspezifischen Diensten illustriert, welches System eine Rundfunkeinheit zur drahtlosen Übermittlung von Daten an ein mobiles Empfangsgerät umfasst.
Figur 2 zeigt ein Flussdiagramm, das ein Beispiel einer Schrittsequenz zum Ausführen von ortspezifischen Diensten illustriert.

### Wege zur Ausführung der Erfindung

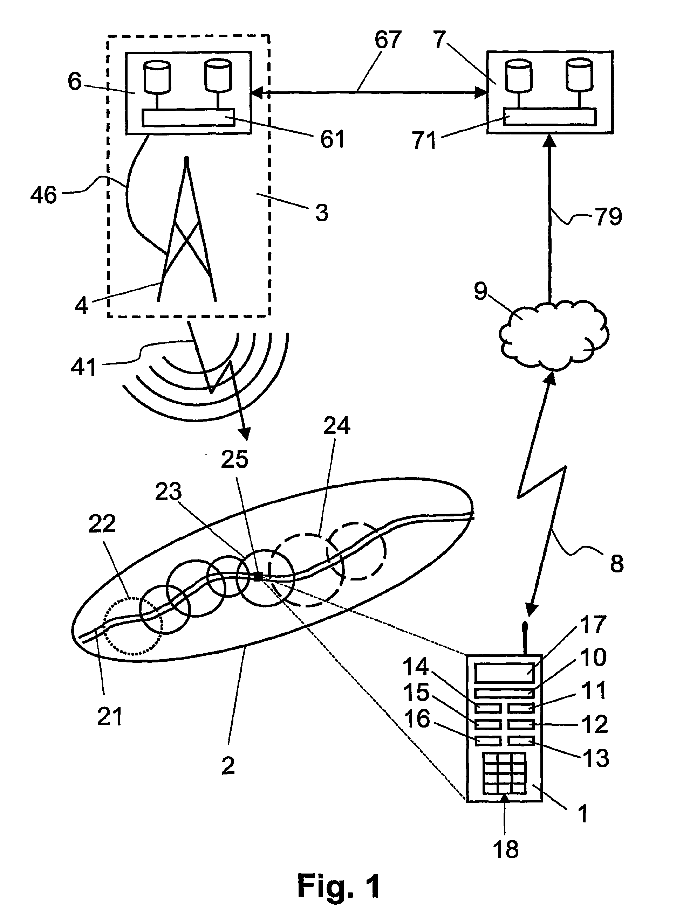

In der Figur 1 bezeichnet das Bezugszeichen 3 eine Rundfunkeinheit mit einem Rundfunksystem 6 (Broadcaster) und einem Rundfunksender 4 (Broadcast Sender) zur drahtlosen Übermittlung von Daten insbesondere an mobile Empfangsgeräte 1. Das Bezugszeichen 46 bezieht sich auf die Verbindung des Rundfunksystems 6 und des Rundfunksenders 4, beispielsweise über eine Kommunikationsverbindung und/oder einen Sender-Zubringer. Wie in der Figur 1 schematisch dargestellt ist, umfasst die Rundfunkeinheit 3 ein Zelldefinierungsmodul 61, das vorzugsweise als programmiertes Softwaremodul zur Steuerung eines Computers der Rundfunkeinheit 3 ausgeführt ist und dessen Funktion später beschrieben wird. Die Rundfunkeinheit 3 ist beispielsweise eingerichtet für die rundfunkmässige Datenübermittlung über DAB (Digital Audio Broadcasting), DMB (Digital Multimedia Broadcasting), DVB (Digital Video Broadcasting) und/oder DVB-H (Digital Video Broadcasting - Handheld). Neben den klassischen unidirektionalen Rundfunksystem können auch bidirektionale Kommunikationssysteme für die rundfunkmässige Datenübermittlung eingesetzt werden. So ist die Rundfunkeinheit 4 beispielsweise, insbesondere für kleinere Versorgungsbereiche, eingerichtet für die rundfunkmässige Datenübermittlung über WLAN (Wireless Local Area Network, z.B. gemäss den 802.11 IEEE Normen), wobei das WLAN einen Rückkanal, für die Datenkommunikation vom Empfangsgerät 1 an die Rundfunkeinheit 3 oder an ein Inhaltslieferungssystem 7 (Content Provider), im gleichen Frequenzband wie der Rundfunkkanal oder in einem unterschiedlichen Frequenzband aufweist. Das Inhaltslieferungssystem 7 ist über die Kommunikationsleitung 67 mit der Rundfunkeinheit 3 verbunden. Neben WLAN sind auch weitere für die rundfunkmässige Datenübermittlung geeignete Kommunikationssysteme, beispielsweise OFDM (Orthogonal Frequency Division Multiplexing), insbesondere im Zusammenhang mit UMA (Unlizensed Mobile Access, Bluetooth) vorteilhaft (kostengünstig und flexibel). In der Figur 1 ist die rundfunkmässige Übermittlung von Daten und Medieninhalten von Rundfunksendungen durch den unidirektionalen Pfeil 41 angedeutet.

Das mobile Empfangsgerät 1 ist ein bidirektionales Kommunikationsendgerät oder ein rein unidirektionales Empfangsgerät. Das mobile Empfangsgerät 1 umfasst ein Kommunikationsmodul 10, das eingerichtet ist, Rundfunksendungen 41 von der Rundfunkeinheit 3 zu empfangen. In einer Ausführungsvariante ist das Kommunikationsmodul 10 zudem eingerichtet über die Luftschnittstelle 8 und das Mobilfunknetz 9 eine Kommunikationsverbindung 79 für Rückmeldungen an das Inhaltslieferungssystem 7 und/oder das Rundfunksystem 6 zu erstellen. Das Mobilfunknetz 9 umfasst beispielsweise ein GSM-Netz (Global System for Mobile Communication), ein UMTS-Netz (Universal Mobile Telecommunication System) oder ein anderes, beispielsweise satellitenbasiertes Mobilfunknetz, ein WLAN, ein OFDM-basiertes Netz oder eine Bluetooth-Zelle. Je nach Ausführungsvariante ist das mobile Empfangsgerät 1 beispielsweise als Mobilfunktelefon, PDA-Computer (Personal Digital Assistant), Notebook oder Laptop-Computer, oder als Radio- respektive Fernsehempfänger ausgeführt. Neben einer Anzeige 17 und Eingabeelementen 18 (Tastatur, Joystick, etc.) umfasst das mobile Empfangsgerät 1 mehrere funktionale Module, nämlich ein Steuermodul 11, ein Zellfestsetzungsmodul 12, ein Positionsbestimmungsmodul 13, ein Präsenzbestimmungsmodul 14, ein Dienstmodul 15 und ein Auswahlmodul 16.

Das Positionsbestimmungsmodul 13 ist eingerichtet zur Bestimmung der aktuellen (örtlichen, geografischen) Position des mobilen Empfangsgeräts 1, zum Beispiel mittels GPS, Galileo oder terrestrischen Ortungssystemen, beispielsweise netzbasierte Ortungssysteme wie E-OTD. In einer Variante ist das Positionsbestimmungsmodul 13 eingerichtet die aktuelle Position mittels A-GPS (Assisted Global Positioning System), z.B. von Global Locate Inc., selbst innerhalb von Gebäuden zu bestimmen (Indoor GPS), so dass äusserst kleine örtliche Zellbereiche innerhalb von Gebäuden definiert werden können. Die Position kann auch basierend auf Informationen eines Mobilfunknetzes bestimmt werden. In einer Variante ist das Positionsbestimmungsmodul 13 überdies eingerichtet, die aktuelle Höhenlage und damit die aktuelle dreidimensionale Position des mobilen Empfangsgeräts 1 zu bestimmen, beispielsweise mittels eines Höhenmessmoduls. Das Höhenmessmodul ist beispielsweise eingerichtet die Höhe über GPS zu bestimmen.

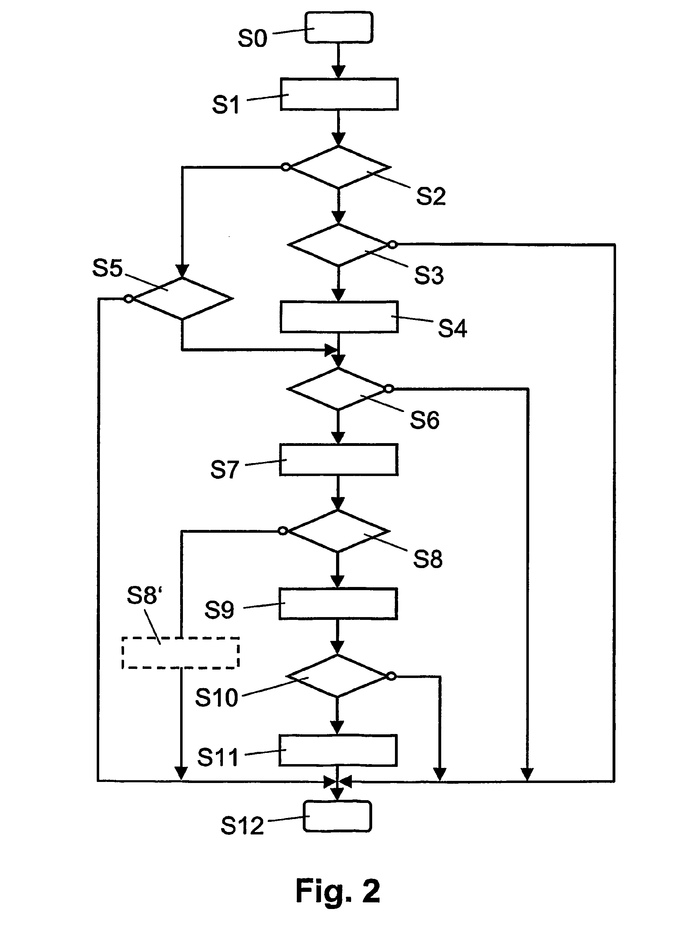

Die verbleibenden funktionalen Module, deren Funktionalität nachfolgend mit Bezug zu Figur 2 beschrieben wird, sind vorzugsweise als programmierte Softwaremodule auf einem Computerprogrammprodukt ausgeführt, das fest oder entfernbar mit dem mobilen Empfangsgerät 1 verbunden ist.

Das mobile Empfangsgerät 1 umfasst vorzugsweise auch ein Verrechnungsmodul zur Verrechnung von Dienstleistungen, beispielsweise basierend auf dem Verfahren von Conditional Access unter Einbezug von ECM (Entitlement Checking Message), EMM (Entitlement Management Message) sowie dem CW (Control Word). Zudem können Conditional Access Prozesse integriert sein, wie sie in den Patentanmeldungen WO 01/67761 und WO 01/67762 beschrieben werden.

In der Figur 1 bezieht sich das Bezugszeichen 2 auf das ausgedehnte Versorgungsgebiet, das durch die Rundfunkeinheit 3 abgedeckt wird. Wie in der Figur 1 angedeutet wird, verläuft beispielsweise eine Strasse 21 durch das Versorgungsgebiet 2. Die aktuelle Position des mobilen Empfangsgeräts 1 ist im Versorgungsgebiet 2 mit dem Bezugszeichen 25 bezeichnet. Die Bezugszeichen 22, 23 und 24 bezeichnen verschiedene Zellen mit unterschiedlichen zweidimensionalen und/oder dreidimensionalen örtlichen respektive räumlichen Zellbereichen (Flächen, z.B. Kreis, und/oder Volumen, z.B. Kugel), die beispielsweise durch ein Zellzentrum und einen Zellradius und/oder anderen Zellbereichsdaten (Koordinaten, Grössenangaben, Orts- oder Gebietsbezeichnungen, Grössen und/oder Formangaben) definiert sind. Mehrere Zellen bilden beispielsweise einen Cluster, die einzelnen Zellbereiche sind dazu zum Beispiel durch eine Clusteridentifizierung einem Zellcluster zugeordnet. In der Figur 1 bezeichnen unterschiedliche Linientypen inaktive Zellen 22, aktive Zellen 23 sowie in Vorbereitung stehende Zellen 24.

Die einzelnen Zellen 22, 23, 24 werden durch Zelldaten beschrieben, welche neben dem Zellbereich jeweils auch einen Zelltyp definieren. Beispiele für Zelltypen umfassen, wie einleitend bereits beschrieben wurde den Alarmtyp, den Informationstyp, den Applikationstyp und/oder den Linktyp. Der Zelltyp definiert den Einsatzzweck einer Zelle, zum Beispiel den Diensttyp eines ortsspezifischen Dienstes und/oder den Datentyp von ortsspezifischen Informationen. Als Teil des Zelltyps, impliziert durch den Zelltyp oder als separates Datenelement umfassen die Zelldaten vorzugsweise auch eine Instruktion respektive einen Ausführungsbefehl. Die Zelldaten umfassen beispielsweise auch Gültigkeitsdaten, welche eine zeitliche Gültigkeit der bereffenden Zelle respektive des betreffenden Zellbereichs definieren. Je nach Ausführungsvariante umfassen die Zelldaten auch eine Zellidentifizierung, beispielsweise einen Code, eine Nummer oder einen Namen. In einer Ausführungsvariante sind der Zelltyp und/oder die Instruktion als Logikdaten separat von den anderen Zelldaten ausgeführt und beispielsweise über die Zellidentifizierung den Zelldaten zugeordnet.

Die Daten und Medieninhalte einer Rundfunksendung 41 werden im Inhaltslieferungssystem 7 oder im Rundfunksystem 6 bereitgestellt. Vorzugsweise kombiniert der Content Provider die zu versendenden Informationen (z.B. Alarme) mit Positionsparametem, für zweidimensionale (Flächen) oder dreidimensionale (Volumen) BLBS-Zellen. Die Zelldaten werden im Rundfunksystem 6 und/oder im Inhaltslieferungssystem 7 generiert. Gegebenenfalls separate Logikdaten werden im Rundfunksystem 6, im Inhaltslieferungssystem 7 und/oder in einem speziellen Logiklieferungssystem generiert. In einer Ausführungsvariante umfasst das Inhaltslieferungssystem 7 dafür ein dem Zelldefinierungsmodul 61 entsprechendes Zelldefinierungsmodul 71. Zur dynamischen Definition der Zellen 22, 23, 24 und ihrer Zellbereiche werden die Zelldaten und die gegebenenfalls separaten Logikdaten vom Zeildefinierungsmodul 61 über den Rundfunksender 4 ausgesendet. Nutzdaten, auf die sich mindestens gewisse der Zelldaten beziehen, werden von der Rundfunkeinheit 3 zusammen mit den entsprechenden Zelldaten oder über eine Zellidentifizierung separat von den Zelldaten ausgesendet.

Das Auswahlmodul 16 ist eingerichtet dem Benutzer auf der Anzeige 17 verfügbare respektive abonnierte Zelltypen aufzulisten und vom Benutzer über die Eingabeelemente 18 Instruktionen zur Selektion respektive Deselektion dieser Zelltypen entgegenzunehmen. Dies ist insbesondere dann sinnvoll, wenn eine grosse Anzahl von Zelltypen verfügbar ist und der Benutzer nicht die ganze Auswahl aktiviert haben will. Vorzugsweise können bestimmte Zelltypen, insbesondere der Alarm-Typ, vom Benutzer nicht deselektiert werden, damit die Informationen, z.B. die Alarminformationen, im Ernstfall tatsächlich an sämtliche Benutzer im Zielbereich übermittelt werden können.

Im Schritt S0 in Figur 2 bewegt sich der Benutzer mit seinem mobilen Empfangsgerät 1 in das Versorgungsgebiet 2 der Rundfunkeinheit 3.

Im Schritt S1 empfängt das mobile Empfangsgerät 1 Daten, die von der Rundfunkeinheit 3 ausgesendet werden, beispielsweise programmbegleitende Daten, die in Rundfunksendungen 41 eingebettet sind.

Im Schritt S2 bestimmt das Steuermodul 11, ob die im Schritt S1 empfangenen Daten Zelldaten umfassen. Wenn keine Zelldaten empfangen wurden, fährt das Steuermodul im Schritt S5 fort, andernfalls im Schritt S3.

Im Schritt S3 bestimmt das Steuermodul 11, ob der Zelltyp der empfangenen Zelldaten im mobilen Empfangsgerät 1 vom Benutzer selektiert wurde (beispielsweise in einer lokalen Zelltypentabelle). Wenn der Zelltyp der empfangenen Zelldaten nicht selektiert ist, fährt das Steuermodul im Schritt S12 fort, andernfalls im Schritt S4.

Im Schritt S4 nimmt das Zellfestsetzungsmodul 12 die empfangenen Zelldaten entgegen und speichert sie im mobilen Empfangsgerät 1 ab.

Im Schritt S5 überprüft das Steuermodul 11, ob die im Schritt S1 empfangenen Daten bereits vorhandenen Zelldaten zugeordnet sind, die im mobilen Empfangsgerät 1 gespeichert sind und die einen vom Benutzer selektierten Zelltyp aufweisen. Falls die empfangenen Daten keinen Zelldaten mit selektiertem Zelltyp zugeordnet sind, fährt das Steuermodul im Schritt S12 fort, andernfalls im Schritt S6.

Im Schritt S6 überprüft das Steuermodul 11, ob die Zelle respektive der Zellbereich, welche durch die im Schritt S4 gespeicherten respektive im Schritt S5 zugeordneten Zelldaten definiert werden, aktiv (gültig) ist. Das heisst das Steuermodul 11 überprüft, ob die Gültigkeitsdaten der betreffenden Zelldaten ein Zeitfenster definieren, das den aktuellen Zeitpunkt umfasst, oder ob die im Schritt S4 gespeicherten Zelldaten eine Start-Instruktion zur sofortigen Aktivierung des betreffenden Zellbereichs aufweisen. Der aktuelle Zeitpunkt kann beispielsweise aus dem GPS-Signal entnommen werden. Falls die Zelldaten respektive der Zellbereich aktiv ist, fährt das Steuermodul 11 im Schritt S7 fort, andernfalls im Schritt S12.

Im Schritt S7 bestimmt das Positionsbestimmungsmodul 13 die aktuelle zwei- oder dreidimensionale Position des mobilen Empfangsgeräts 1.

Im Schritt S8 bestimmt das Präsenzbestimmungsmodul 14, ob die im Schritt S7 bestimmte aktuelle Position sich im Zellbereich befindet, der durch die im Schritt S4 gespeicherten respektive im Schritt S5 zugeordneten Zelldaten definiert ist. Das heisst, das Präsenzbestimmungsmodul 14 bestimmt die aktuelle Präsenz des mobilen Empfangsgeräts 1 im betreffenden Zellbereich. Beispielsweise ermittelt das Präsenzbestimmungsmodul 14, ob sich die aktuelle Position des mobilen Empfangsgeräts 1 in einer durch die Zelldaten definierten Fläche beziehungsweise Kugel befindet. Bei positiv bestimmter Präsenz des mobilen Empfangsgeräts 1 im betreffenden Zellbereich, das heisst, wenn sich das mobile Empfangsgerät 1 im betreffenden Zellbereich befindet, fährt das Steuermodul 11 im Schritt S9 fort, anderenfalls im Schritt S12.

Im Schritt S9 führt das Dienstmodul 15 den ortsspezifischen Dienst aus, der durch die im Schritt S4 gespeicherten respektive im Schritt S5 zugeordneten Zelldaten bestimmt wird. Zur Ausführung des ortsspezifischen Dienstes werden die vorgenannten Zelldaten und gegebenenfalls weitere den Zelldaten zugeordnete Nutzdaten verwendet, die beispielsweise im Schritt S1 zusammen mit den Zelldaten empfangen wurden oder die im Schritt S1 separat empfangen und im Schritt S5 den gespeicherten Zelldaten zugeordnet wurden. Das Dienstmodul 15 bestimmt den auszuführenden Dienst auf Grund der Logikdaten, welche den Zelltyp und/oder die zugeordnete Instruktion umfassen und welche als Teil der Zelldaten oder zugeordnet zu den Zelldaten separat empfangen wurden. Bei Zelltyp/Instruktion für Alarme, für Informationen und Informationskategorien (Subtypen) werden die zugeordneten Alarminformationen respektive kategorisierten anderen Informationen (gespeicherte oder gemeinsam mit den Zelldaten übertragene Daten) dem Benutzer unmittelbar wiedergegeben, beispielsweise visuell und/oder akustisch. Bei Zelltyp/Instruktion für Applikationen oder Links werden die zugeordneten ausführbaren Programmsequenzen, Programmdateien (Applet), Applikationen (gespeicherte oder gemeinsam mit den Zelldaten übertragene Daten) auf dem mobilen Empfangsgerät 1 ausgeführt respektive es wird auf den zugeordneten Link (gespeichert oder mitübertragen) zugegriffen. Ortsabhängige Applikationen umfassen beispielsweise ausführbare Multimediadateien (z.B. nur bedingt gemäss "Conditional Access" nutzbar), die beispielsweise zusätzlich mit einem Link vernetzt sind, um eine Verbindung über ein Kommunikationsnetz 9 aufzubauen, so dass weitere Daten auf das mobile Empfangsgerät 1 geladen werden. Ortsabhängige Links verweisen beispielsweise auf kostenpflichtige Informationen.

Im Schritt S10 überprüft das Steuermodul 11, ob die betreffende Zelle deaktiviert werden muss, das heisst, ob die im Schritt S4 gespeicherten Zelldaten eine Stopp-Instruktion zur unmittelbaren Deaktivierung des Zellbereichs umfassen oder ob die im Schritt S5 zugeordneten Zelldaten Gültigkeitsdaten mit einem abgelaufenen Zeitfenster umfassen. Falls die betreffende Zelle deaktiviert werden muss, fährt das Steuermodul 11 im Schritt S11 fort, andernfalls im Schritt S12.

Im Schritt S11 deaktiviert das Steuermodul 11 die betreffende Zelle beispielsweise durch Löschen der entsprechenden Zelldaten im mobilen Empfangsgerät 1.

Im Schritt S12 beendet das Steuermodul 11 einen Zyklus zur Bearbeitung empfangener Rundfunkdaten im Versorgungsgebiet 2 und empfängt im Schritt S1 neue Daten von der Rundfunkeinheit 3.

In einer Ausführungsvariante kann sich der Benutzer durch das Steuermodul 11 Informationen über verfügbare Dienste in benachbarten Zellen 22, 23, 24 auf der Anzeige 17 darstellen lassen. Dazu speichert das Steuermodul 11 im optionalen Schritt S8' beispielsweise Zelldaten zu Zellbereichen in der Nachbarschaft der aktuellen Position 25 des mobilen Endgeräts 1, zum Beispiel begrenzt auf einen bestimmten Umkreis der aktuellen Position 25.

Abschliessend sollen folgende Anwendungsbeispiele angeführt werden: Definition von virtuellen Versorgungszellen respektive Zellclustern entlang einer Autobahn (Strasse 21) zur Information über den Strassenzustand; in einem Gebiet mit grosser Präsenz chemischer Industrie zur Alarmierung bei Chemieunfällen; in Touristikgebieten zur gezielten Zustellung von Informationen dynamisch, je nach Standort und Zeit; in grossen Gebäudekomplexen zur stockwerkspezifischen und/oder raumspezifischen gezielten Informationsübermittlung (z.B. öffentlichen Gebäude wie Bahnhöfe oder Flughäfen) oder auch in anderen kleinflächigen oder kleinräumigen Gebieten, wie beispielsweise Museen, Ausstellungen und Anlässen jeder Art zur gezielten Informationszustellung in grossen, flächendeckenden Broadcasting-Gebieten.

## Patentansprüche

1. Verfahren zum Ausführen von ortspezifischen Diensten einer Rundfunkeinheit (3), umfassend:
Einrichten, in einer Vielzahl von mobilen Empfangsgeräten (1) im Versorgungsbereich (2) der Rundfunkeinheit (3), von Teilbereichen des Versorgungsbereichs (2) als Zellen (22, 23, 24) für die ortsspezifischen Dienste durch:
rundfunkmässiges Übermitteln von Zelldaten mit Zellbereichsdaten, die einen örtlichen Zellbereich definieren, durch Aussenden der Zelldaten als programmbegleitende Daten eingebettet in eine Rundfunksendung (41) über einen Rundfunksender (4) der Rundfunkeinheit (3) an die mobilen Empfangsgeräte (1),
Speichern der Zelldaten (S4) mit den Zellbereichsdaten jeweils in den mobilen Empfangsgeräten (1),
Bestimmen (S7) jeweils in einem der mobilen Empfangsgeräte (1) einer aktuellen geografischen Position (25) des mobilen Empfangsgeräts (1), und
Bestimmen (S8) durch das mobile Empfangsgerät (1) einer aktuellen Präsenz des mobilen Empfangsgeräts (1) im Zellbereich, durch Ermitteln, ob sich die aktuelle geografische Position (25) im durch die Zellbereichsdaten definierten Zellbereich befindet; und
bei positiv bestimmter Präsenz des mobilen Empfangsgeräts (1) im Zellbereich, Ausführen (S9) eines den Zelldaten zugeordneten Dienstes im mobilen Empfangsgerät (1).

2. Verfahren nach Anspruch 1, **dadurch gekennzeichnet, dass** die ortspezifischen Dienste eine Datenübermittlung von der Rundfunkeinheit (3) an das mobile Empfangsgerät (1) umfassen; und dass bei positiv bestimmter Präsenz des mobilen Empfangsgeräts (1) im Zellbereich, den Zelldaten zugeordnete empfangene Daten im mobilen Empfangsgerät (1) entgegengenommen und verarbeitet werden.

3. Verfahren nach einem der Ansprüche 1 oder 2, **dadurch gekennzeichnet, dass** die Rundfunkeinheit (3) Nutzdaten den Zelldaten zuordnet und die Nutzdaten zusammen mit den Zelldaten an das mobile Empfangsgerät (1) übermittelt.

4. Verfahren nach einem der Ansprüche 1 bis 3, **dadurch gekennzeichnet, dass** die Zelldaten eine Zellidentifizierung umfassen; dass die Rundfunkeinheit (3) Nutzdaten zusammen mit der Zellidentifizierung separat von den Zelldaten an das mobile Empfangsgerät (1) übermittelt; und dass das mobile Empfangsgerät (1) die Nutzdaten auf Grund der Zellidentifizierung den gespeicherten Zelldaten zuordnet.

5. Verfahren nach einem der Ansprüche 1 bis 4, **dadurch gekennzeichnet, dass** die Zelldaten eine Instruktion umfassen; und dass die Instruktion im mobilen Empfangsgerät (1) bei positiv bestimmter Präsenz des mobilen Empfangsgeräts (1) im Zellbereich ausgeführt wird.

6. Verfahren nach einem der Ansprüche 1 bis 5, **dadurch gekennzeichnet, dass** die Zelldaten einen Zelltyp umfassen; und dass den Zelldaten zugeordnete empfangene Daten im mobilen Empfangsgerät (1) abhängig vom Zelltyp weiter verarbeitet werden.

7. Verfahren nach Anspruch 6, **dadurch gekennzeichnet, dass** der Zelltyp mindestens einen Wert aus Alarmtyp für Alarme, Informationstyp für Informationsdaten verschiedener Kategorien, Applikationstyp für ausführbare Applikation und Linktyp für Hyperlinks umfasst.

8. Verfahren nach einem der Ansprüche 6 oder 7, **dadurch gekennzeichnet, dass** das mobile Empfangsgerät (1) vom Benutzer Auswahlbefehle zur Selektion von Zelltypen entgegennimmt; und dass im mobilen Empfangsgerät (1) der den Zelldaten zugeordnete Dienst ausgeführt wird bei positiv bestimmter Präsenz des mobilen Empfangsgeräts (1) in einem Zellbereich mit selektiertem Zelltyp.

9. Verfahren nach einem der Ansprüche 1 bis 8, **dadurch gekennzeichnet, dass** die Zelldaten einen dreidimensionalen örtlichen Zellbereich definieren; dass eine aktuelle dreidimensionale Position des mobilen Empfangsgeräts (1) bestimmt wird; und dass die aktuelle Präsenz des mobilen Empfangsgeräts (1) im dreidimensionalen örtlichen Zellbereich auf Grund der aktuellen dreidimensionalen Position bestimmt wird.

10. Verfahren nach einem der Ansprüche 1 bis 9, **dadurch gekennzeichnet, dass** die Zelldaten Gültigkeitsdaten umfassen, welche eine zeitliche Gültigkeit des örtlichen Zellbereichs definieren, wobei die Gültigkeitsdaten mindestens eines aus Start-Instruktion zur sofortigen Aktivierung des Zellbereichs, Stopp-Instruktion zur unmittelbaren Deaktivierung des Zellbereichs, Startzeitwert und Stoppzeitwert zur Definition eines Zeitfensters, und Startzeitwert und Dauer zur Definition eines Zeitfensters umfassen.

11. Verfahren nach einem der Ansprüche 1 bis 10, **dadurch gekennzeichnet, dass** die Zelldaten einen Cluster von mehreren örtlichen Zellbereichen definieren.

12. Rundfunkeinheit (3), die eingerichtet ist, zur rundfunkmässigen Übermittlung von Daten an mobile Empfangsgeräte (1) im Versorgungsbereich (2) der Rundfunkeinheit (3), umfassend:
ein Zelldefinierungsmodul (61) zur Übermittlung von Zelldaten mit Zellbereichsdaten, die einen Teilbereich des Versorgungsbereichs (2) als örtlichen Zellbereich definieren, und
Mittel zum Aussenden der Zelldaten als programmbegleitende Daten eingebettet in eine Rundfunksendung (41) über einen Rundfunksender (4) der Rundfunkeinheit (3) an die mobilen Empfangsgeräte (1).

13. Rundfunkeinheit (3) nach Anspruch 12, **dadurch gekennzeichnet, dass** die Rundfunkeinheit (3) eingerichtet ist, Nutzdaten zusammen mit den Zelldaten an die mobilen Empfangsgeräte (1) zu übermitteln.

14. Rundfunkeinheit (3) nach einem der Ansprüche 12 oder 13, **dadurch gekennzeichnet, dass** die Rundfunkeinheit (3) eingerichtet ist, den Zelldaten eine Zellidentifizierung einzufügen, und Nutzdaten zusammen mit einer Zellidentifizierung separat von den Zelldaten an die mobilen Empfangsgeräte (1) zu übermitteln.

15. Mobiles Empfangsgerät (1), das eingerichtet ist, von einer Rundfunkeinheit (3) ausgesendete Daten zu empfangen, umfassend:
ein Kommunikationsmodul (10) zum Empfangen im Versorgungsbereich (2) der Rundfunkeinheit (3) von Rundfunksendungen (41), die über einen Rundfunksender (4) der Rundfunkeinheit (3) ausgesendet werden;
ein Zellfestsetzungsmodul (12) zum Entgegennehmen und Speichern von Zelldaten, die einen Teilbereich des Versorgungsbereichs (2) als örtlichen Zellbereich definieren
und die als programmbegleitende Daten eingebettet in eine Rundfunksendung (41) über den Rundfunksender (4) ausgesendet werden;
ein Positionsbestimmungsmodul (13) zum Bestimmen einer aktuellen Position des mobilen Empfangsgeräts (1);
ein Präsenzbestimmungsmodul (14) zum Bestimmen einer aktuellen Präsenz des mobilen Empfangsgeräts (1) im Zellbereich auf Grund der aktuellen Position; und
ein Dienstmodul (15) zum Ausführen eines den Zelldaten zugeordneten Dienstes im mobilen Empfangsgerät (1), bei positiv bestimmter Präsenz des mobilen Empfangsgeräts (1) im Zellbereich.

16. Mobiles Empfangsgerät (1) nach Anspruch 15, **dadurch gekennzeichnet, dass** das Dienstmodul (15) eingerichtet ist, den Zelldaten zugeordnete empfangene Daten entgegenzunehmen und zu verarbeiten, bei positiv bestimmter Präsenz des mobilen Empfangsgeräts (1) im Zellbereich.

17. Mobiles Empfangsgerät (1) nach einem der Ansprüche 15 oder 16, **dadurch gekennzeichnet, dass** die Zelldaten eine Zellidentifizierung umfassen; dass das Zellfestsetzungsmodul (12) eingerichtet ist, die Zelldaten im mobilen Empfangsgerät (1) zu speichern; und dass das Dienstmodul (15) eingerichtet ist, empfangene Daten auf Grund einer von der Rundfunkeinheit (3) zusammen mit den Daten übermittelten Zellidentifizierung den gespeicherten Zelldaten zuzuordnen.

18. Mobiles Empfangsgeräte (1) nach einem der Ansprüche 15 bis 17, **dadurch gekennzeichnet, dass** die Zelldaten eine Instruktion umfassen; und dass das Dienstmodul (15) eingerichtet ist, bei positiv bestimmter Präsenz des mobilen Empfangsgeräts (1) im Zellbereich, die Instruktion auszuführen.

19. Mobiles Empfangsgerät (1) nach einem der Ansprüche 15 bis 18, **dadurch gekennzeichnet, dass** die Zelldaten einen Zelltyp umfassen; und dass das Dienstmodul (15) eingerichtet ist, empfangene Daten abhängig vom Zelltyp zu verarbeiten.

20. Mobiles Empfangsgerät (1) nach einem der Ansprüche 15 bis 19, **dadurch gekennzeichnet, dass** das mobile Empfangsgerät (1) ein Auswahlmodul (16) umfasst, welches eingerichtet ist, vom Benutzer Auswahlbefehle zur Selektion von Zelltypen entgegenzunehmen; und dass das Dienstmodul (15) eingerichtet ist, zum Ausführen des den Zelldaten zugeordneten Dienstes, bei positiv bestimmter Präsenz des mobilen Empfangsgerät (1) in einem Zellbereich mit selektiertem Zelltyp.

21. Mobiles Empfangsgerät (1) nach einem der Ansprüche 15 bis 20, **dadurch gekennzeichnet, dass** die Zelldaten einen dreidimensionalen örtlichen Zellbereich definieren; dass das Positionsbestimmungsmodul (13) eingerichtet ist, eine aktuelle dreidimensionale Position des mobilen Empfangsgeräts (1) zu bestimmen; und dass das Präsenzbestimmungsmodul (14) eingerichtet ist, die aktuelle Präsenz des mobilen Empfangsgerät (1) im dreidimensionalen örtlichen Zellbereich auf Grund der aktuellen dreidimensionalen Position zu bestimmen.

22. Computerprogrammprodukt, umfassend Computerprogrammcodemittel zur Steuerung eines oder mehrerer Prozessoren eines mobilen Empfangsgeräts (1), welches mobile Empfangsgerät (1) eingerichtet ist, im Versorgungsbereich (2) einer Rundfunkeinheit (3) Rundfunksendungen (41), die über einen Rundfunksender (4) der Rundfunkeinheit (3) ausgesendet werden, zu empfangen, und eine aktuelle Position des mobilen Empfangsgeräts (1) zu bestimmen, derart, dass das mobile Empfangsgerät (1)
Zelldaten empfängt und speichert, die einen Teilbereich des Versorgungsbereichs (2) als örtlichen Zellbereich definieren
und die als programmbegleitende Daten eingebettet in eine Rundfunksendung (41) über den Rundfunksender (4) ausgesendet werden;
eine aktuelle Präsenz des mobilen Empfangsgeräts (1) im Zellbereich auf Grund der aktuellen Position bestimmt; und
einen den Zelldaten zugeordneten Dienst ausführt, bei positiv bestimmter Präsenz des mobilen Empfangsgeräts (1) im Zellbereich.

## Claims

1. Method for performing location-specific services of a broadcasting unit (3), comprising:
setting up, in a multitude of mobile receiving devices (1) in the service area (2) of the broadcasting unit (3), subareas of the service area (2) as cells (22, 23, 24) for the location-specific services through:
broadcast-based transfer of cell data with cell area data which define a local cell area by transmitting the cell data as program-accompanying data embedded in a broadcast transmission (41) via a broadcast transmitter (4) of the broadcasting unit (3) to the mobile receiving devices (1),
storage of the cell data (S4) with the cell area data in each case in the mobile receiving devices (1),
definition (S7) in each case in one of the mobile receiving devices (1) of a current geographical position (25) of the mobile receiving device (1), and
definition (S8) by the mobile receiving device (1) of a current presence of the mobile receiving device (1) in the cell area by determining whether the current geographical position (25) is located in the cell area defined by the cell area data; and,
in the event of a positively defined presence of the mobile receiving device (1) in the cell area, performance (S9) of a service assigned to the cell data in the mobile receiving device (1).

2. Method according to Claim 1, **characterized in that** the location-specific services comprise a data transfer from the broadcasting unit (3) to the mobile receiving device (1); and that, in the event of a positively defined presence of the mobile receiving device (1) in the cell area, received data assigned to the cell data are accepted and processed in the mobile receiving device (1).

3. Method according to one of Claims 1 or 2, **characterized in that** the broadcasting unit (3) assigns user data to the cell data and transfers the user data together with the cell data to the mobile receiving device (1).

4. Method according to one of Claims 1 to 3, **characterized in that** the cell data comprise a cell identification; that the broadcasting unit (3) transfers user data together with the cell identification separately from the cell data to the mobile receiving device (1); and that the mobile receiving device (1) assigns the user data to the stored cell data on the basis of the cell identification.

5. Method according to one of Claims 1 to 4, **characterized in that** the cell data comprise an instruction; and that the instruction is carried out in the mobile receiving device (1) in the event of a positively defined presence of the mobile receiving device (1) in the cell area.

6. Method according to one of Claims 1 to 5, **characterized in that** the cell data comprise a cell type; and that received data assigned to the cell data are further processed in the mobile receiving device (1) depending on the cell type.

7. Method according to Claim 6, **characterized in that** the cell type comprises at least one value from alarm type for alarms, information type for information data of various categories, application type for executable applications and link type for hyperlinks.

8. Method according to one of Claims 6 or 7, **characterized in that** the mobile receiving device (1) accepts selection commands from the user for the selection of cell types; and that the service assigned to the cell data is performed in the mobile receiving device (1) in the event of a positively defined presence of the mobile receiving device (1) in a cell area with a selected cell type.

9. Method according to one of Claims 1 to 8, **characterized in that** cell data define a three-dimensional local cell area; that a current three-dimensional position of the mobile receiving device (1) is defined; and that the current presence of the mobile receiving device (1) in the three-dimensional local cell area is defined on the basis of the current three-dimensional position.

10. Method according to one of Claims 1 to 9, **characterized in that** the cell data comprise validity data which define a temporal validity of the local cell area, whereby the validity data comprise at least one from a start instruction for instant activation of the cell area, a stop instruction for immediate deactivation of the cell area, a start time value and stop time value for the definition of a time window and a start time value and a duration for the definition of a time window.

11. Method according to one of Claims 1 to 10, **characterized in that** the cell data define a cluster of a plurality of local cell areas.

12. Broadcasting unit (3) which is set up for the broadcast-based transfer of data to mobile receiving devices (1) in the service area (2) of the broadcasting unit (3), comprising:
a cell-definition module (61) to transfer cell data with cell area data which define a subarea of the service area (2) as a local cell area, and
means for transmitting the cell data as program-accompanying data embedded in a broadcast transmission (41) via a broadcast transmitter (4) of the broadcasting unit (3) to the mobile receiving devices (1).

13. Broadcasting unit (3) according to Claim 12, **characterized in that** the broadcasting unit (3) is set up to transfer user data together with the cell data to the mobile receiving devices (1).

14. Broadcasting unit (3) according to one of Claims 12 or 13, **characterized in that** the broadcasting unit (3) is set up to insert a cell identification into the cell data, and to transfer user data together with a cell identification separately from the cell data to the mobile receiving devices (1).

15. Mobile receiving device (1) which is set up to receive data transmitted by a broadcasting unit (3), comprising:
a communications module (10) to receive in the service area (2) of the broadcasting unit (3) broadcast transmissions (41) which are transmitted via a broadcast transmitter (4) of the broadcasting unit (3);
a cell-definition module (12) to accept and store cell data which define a subarea of the service area (2) as a local cell area and are transmitted as program-accompanying data embedded in a broadcast transmission (41) via the broadcast transmitter (4);
a position-definition module (13) to define a current position of the mobile receiving device (1);
a presence-definition module (14) to define a current presence of the mobile receiving device (1) in the cell area on the basis of the current position; and
a service module (15) to perform a service assigned to the cell data in the mobile receiving device (1), in the event of a positively defined presence of the mobile receiving device (1) in the cell area.

16. Mobile receiving device (1) according to Claim 15, **characterized in that** the service module (15) is set up to accept and process received data assigned to the cell data, in the event of a positively defined presence of the mobile receiving device (1) in the cell area.

17. Mobile receiving device (1) according to one of Claims 15 or 16, **characterized in that** the cell data comprise a cell identification; that the cell-definition module (12) is set up to store the cell data in the mobile receiving device (1); and that the service module (15) is set up to assign received data to the stored cell data on the basis of a cell identification transferred by the broadcasting unit (3) together with the data.

18. Mobile receiving device (1) according to one of Claims 15 to 17, **characterized in that** the cell data comprise an instruction; and that the service module (15) is set up to carry out the instruction in the event of a positively defined presence of the mobile receiving device (1) in the cell area.

19. Mobile receiving device (1) according to one of Claims 15 to 18, **characterized in that** the cell data comprise a cell type; and that the service module (15) is set up to process received data depending on the cell type.

20. Mobile receiving device (1) according to one of Claims 15 to 19, **characterized in that** the mobile receiving device (1) comprises a selection module (16) which is set up to accept selection commands from the user for the selection of cell types; and that the service module (15) is set up to perform the service assigned to the cell data, in the event of a positively defined presence of the mobile receiving device (1) in a cell area with a selected cell type.

21. Mobile receiving device (1) according to one of Claims 15 to 20, **characterized in that** the cell data define a three-dimensional local cell area; that the position-definition module (13) is set up to define a current three-dimensional position of the mobile receiving device (1); and that the presence-definition module (14) is set up to define the current presence of the mobile receiving device (1) in the three-dimensional local cell area on the basis of the current three-dimensional position.

22. Computer program product, comprising computer program code means to control one or more processors of a mobile receiving device (1), said mobile receiving device (1) being set up to receive, in the service area (2) of a broadcast unit (3), broadcast transmissions (41) which are transmitted via a broadcast transmitter (4) of the broadcasting unit (3) and to define a current position of the mobile receiving device (1) in such a way that the mobile receiving device (1)
receives and stores cell data which define a subarea of the service area (2) as a local cell area
and are transmitted as program-accompanying data embedded in a broadcast transmission (41) via the broadcast transmitter (4);
defines a current position of the mobile receiving device (1) in the cell area on the basis of the current position; and
performs a service assigned to the cell data, in the event of a positively defined presence of the mobile receiving device (1) in the cell area.

## Revendications

1. Procédé pour exécuter des services spécifiques à l'emplacement d'une unité de radiodiffusion (3) comprenant :
établissement, dans une pluralité de récepteurs mobiles (1) dans la zone de distribution (2) de l'unité de radiodiffusion (3), de zones partielles de la zone de distribution (2) sous la forme de cellules (22, 23, 24) pour les services spécifiques à l'emplacement par :
communication radiodiffusée de données de cellules avec des données de zone de cellule qui définissent une zone de cellule locale en émettant les données de cellule sous la forme de données accompagnant un programme incluses dans une émission de radiodiffusion (41) par le biais d'un émetteur de radiodiffusion (4) de l'unité de radiodiffusion (3) aux récepteurs mobiles (1),
mémorisation des données de cellule (S4) avec les données de zone de cellule à chaque fois dans les récepteurs mobiles (1),
détermination (S7) à chaque fois dans l'un des récepteurs mobiles (1) d'une position géographique actuelle (25) du récepteur mobile (1),
détermination (S8) par le récepteur mobile (1) d'une présence actuelle du récepteur mobile (1) dans la zone de cellule en vérifiant si la position géographique actuelle (25) se trouve dans la zone de cellule définie par les données de zone de cellule et
en cas de présence constatée positive du récepteur mobile (1) dans la zone de cellule, exécution (S9) d'un service associé aux données de cellule dans le récepteur mobile (1).

2. Procédé selon la revendication 1, **caractérisé en ce que** les services spécifiques à l'emplacement comprennent une communication de données de l'unité de radiodiffusion (3) vers le récepteur mobile (1) et qu'en cas de présence constatée positive du récepteur mobile (1) dans la zone de cellule, les données reçues associées aux données de cellule sont acceptées et traitées dans le récepteur mobile (1).

3. Procédé selon l'une des revendications 1 ou 2, **caractérisé en ce que** l'unité de radiodiffusion (3) affecte des données utiles aux données de cellule et communique les données utiles conjointement avec les données de cellule au récepteur mobile (1).

4. Procédé selon l'une des revendications 1 à 3, **caractérisé en ce que** les données de cellule comprennent un identifiant de cellule, que l'unité de radiodiffusion (3) communique les données utiles conjointement avec l'identifiant de cellule séparément des données de cellule au récepteur mobile (1), et que le récepteur mobile (1) affecte les données utiles aux données de cellule mémorisées en se basant sur l'identifiant de cellule.

5. Procédé selon l'une des revendications 1 à 4, **caractérisé en ce que** les données de cellule comprennent une instruction et que l'instruction est exécutée dans le récepteur mobile (1) en cas de présence constatée positive du récepteur mobile (1) dans la zone de cellule.

6. Procédé selon l'une des revendications 1 à 5, **caractérisé en ce que** les données de cellule comprennent un type de cellule et que les données reçues affectées aux données de cellule sont traitées ultérieurement dans le récepteur mobile (1) en fonction du type de cellule.

7. Procédé selon la revendication 6, **caractérisé en ce que** le type de cellule comprend au moins une valeur parmi les suivantes : type d'alarme pour des alarmes, type d'information pour les données d'information de différentes catégories, type d'application pour une application exécutable et type de lien pour des liens hypertexte.

8. Procédé selon l'une des revendications 6 ou 7, **caractérisé en ce que** le récepteur mobile (1) accepte de la part de l'utilisateur des instructions de sélection pour sélectionner des types de cellule et que le service associé aux données de cellule est exécuté dans le récepteur mobile (1) en cas de présence constatée positive du récepteur mobile (1) dans une zone de cellule du type de cellule sélectionné.

9. Procédé selon l'une des revendications 1 à 8, **caractérisé en ce que** les données de cellule définissent une zone de cellule locale tridimensionnelle, qu'une position tridimensionnelle actuelle du récepteur mobile (1) est déterminée et que la présence actuelle du récepteur mobile (1) dans la zone de cellule locale tridimensionnelle est définie sur la base de la position tridimensionnelle actuelle.

10. Procédé selon l'une des revendications 1 à 9, **caractérisé en ce que** les données de cellule comprennent des données de validité qui définissent une validité dans le temps de la zone de cellule locale, les données de validité comprenant au moins l'une des suivantes : instruction de départ pour activer immédiatement la zone de cellule, instruction d'arrêt pour désactiver immédiatement la zone de cellule, valeur du temps de départ et valeur du temps d'arrêt pour définir un créneau temporel et valeur du temps de départ et durée pour définir un créneau temporel.

11. Procédé selon l'une des revendications 1 à 10, **caractérisé en ce que** les données de cellule définissent une grappe de plusieurs zones de cellule locales.

12. Unité de radiodiffusion (3) qui est conçue pour la communication radiodiffusée de données à des récepteurs mobiles (1) dans la zone de distribution (2) de l'unité de radiodiffusion (3), comprenant :
un module de définition de cellule (61) pour communiquer des données de cellule avec des données de zone de cellule qui définissent une zone partielle de la zone de distribution (2) en tant que zone de cellule locale, et
des moyens pour émettre les données de cellule sous la forme de données accompagnant un programme incluses dans une émission de radiodiffusion (41) par le biais d'un émetteur de radiodiffusion (4) de l'unité de radiodiffusion (3) aux récepteurs mobiles (1).

13. Unité de radiodiffusion (3) selon la revendication 12, **caractérisée en ce que** l'unité de radiodiffusion (3) est conçue pour communiquer des données utiles conjointement avec les données de cellule aux récepteurs mobiles (1).

14. Unité de radiodiffusion (3) selon l'une des revendications 12 ou 13, **caractérisée en ce que** l'unité de radiodiffusion (3) est conçue pour insérer dans les données de cellule un identifiant de cellule et pour communiquer les données utiles conjointement avec l'identifiant de cellule séparément des données de cellule aux récepteurs mobiles (1).

15. Récepteur mobile (1) qui est conçu pour recevoir les données émises par une unité de radiodiffusion (3), comprenant :
un module de communication (10) pour recevoir dans la zone de distribution (2) de l'unité de radiodiffusion (3) des émissions radiodiffusées (41) qui sont émises par le biais d'un émetteur de radiodiffusion (4) de l'unité de radiodiffusion (3) ;
un module de définition de cellule (12) pour accepter et mémoriser des données de cellule qui définissent une zone partielle de la zone de distribution (2) en tant que zone de cellule locale et qui sont émises par le biais de l'émetteur de radiodiffusion (4) sous la forme de données accompagnant un programme incluses dans une émission de radiodiffusion (41) ;
un module de détermination de la position (13) pour déterminer une position actuelle du récepteur mobile (1) ;
un module de détermination de la présence (14) pour déterminer une présence actuelle du récepteur mobile (1) dans la zone de cellule en se basant sur la position actuelle ; et
un module de service (15) pour exécuter un service associé aux données de cellule dans le récepteur mobile (1) en cas de présence constatée positive du récepteur mobile (1) dans la zone de cellule.

16. Récepteur mobile (1) selon la revendication 15, **caractérisé en ce que** le module de service (15) est conçu pour accepter et traiter les données reçues associées aux données de cellule en cas de présence constatée positive du récepteur mobile (1) dans la zone de cellule.

17. Récepteur mobile (1) selon l'une des revendications 15 ou 16, **caractérisé en ce que** les données de cellule comprennent un identifiant de cellule, que le module de définition de cellule (12) est conçu pour mémoriser les données de cellule dans le récepteur mobile (1) et que le module de service (15) est conçu pour affecter les données reçues aux données de cellule mémorisées sur la base d'un identifiant de cellule communiqué par l'unité de radiodiffusion (3) conjointement avec les données.

18. Récepteur mobile (1) selon l'une des revendications 15 à 17, **caractérisé en ce que** les données de cellule comprennent une instruction et que le module de service (15) est conçu pour exécuter l'instruction en cas de présence constatée positive du récepteur mobile (1) dans la zone de cellule.

19. Récepteur mobile (1) selon l'une des revendications 15 à 18, **caractérisé en ce que** les données de cellule comprennent un type de cellule et que le module de service (15) est conçu pour traiter les données reçues en fonction du type de cellule.

20. Récepteur mobile (1) selon l'une des revendications 15 à 19, **caractérisé en ce que** le récepteur mobile (1) comprend un module de sélection (16) qui est conçu pour accepter de la part de l'utilisateur des instructions de sélection destinées à sélectionner les types de cellule et que le module de service (15) est conçu pour exécuter le service associé aux données de cellule en cas de présence constatée positive du récepteur mobile (1) dans une zone de cellule ayant le type de cellule sélectionné.

21. Récepteur mobile (1) selon l'une des revendications 15 à 20, **caractérisé en ce que** les données de cellule définissent une zone de cellule locale tridimensionnelle, que le module de détermination de la position (13) est conçu pour déterminer une position tridimensionnelle actuelle du récepteur mobile (1) et que le module de détermination de la présence (14) est conçu pour déterminer la présence actuelle du récepteur mobile (1) dans la zone de cellule locale tridimensionnelle sur la base de la position tridimensionnelle actuelle.

22. Programme informatique comprenant des moyens de code de programme informatique pour commander un ou plusieurs processeurs d'un récepteur mobile (1), lequel récepteur mobile (1) est conçu pour recevoir dans la zone de distribution (2) d'une unité de radiodiffusion (3) des émissions de radiodiffusion (41) qui sont émises par le biais d'un émetteur de radiodiffusion (4) de l'unité de radiodiffusion (3) et pour déterminer une position actuelle du récepteur mobile (1) de telle sorte que le récepteur mobile (1)
reçoit et mémorise des données de cellule qui définissent une zone partielle de la zone de distribution (2) en tant que zone de cellule locale
et celles-ci sont émises dans une émission de radiodiffusion (41) par le biais de l'émetteur de radiodiffusion (4) en étant intégrées en tant que données accompagnant un programme ;
détermine une présence actuelle du récepteur mobile (1) dans la zone de cellule en se basant sur la position actuelle ; et
exécute un service associé aux données de cellule en cas de présence constatée positive du récepteur mobile (1) dans la zone de cellule.
